# EUROPÄISCHE PATENTSCHRIFT

(11) **EP 4 616 690 B1**
(45) Veröffentlichungstag und Bekanntmachung des Hinweises auf die Patenterteilung: **07.10.2026**
(21) Anmeldenummer: 25162898.8
(22) Anmeldetag: 11.03.2025
(51) Int. Cl.: A01B 29/04, A01B 29/06, A01B 63/22

(54) **LANDWIRTSCHAFTLICHES ARBEITSGERÄT**
AGRICULTURAL WORKING DEVICE
OUTIL AGRICOLE

(30) Priorität: 13.03.2024 DE 102024107108
(43) Veröffentlichungstag der Anmeldung: 17.09.2025
(73) Patentinhaber: Amazonen-Werke H. Dreyer SE & Co. KG, 49205 Hasbergen (DE)
(72) Erfinder: Brinkmann, Stefan, 49205 Hasbergen (DE); Stier, Roy, 49205 Hasbergen (DE)

(56) Entgegenhaltungen:
- EP-A1- 2 422 597
- EP-A1- 3 858 124
- EP-B1- 2 944 166
- WO-A1-2006/131631
- WO-A1-2023/138737

## Beschreibung

Die Erfindung betrifft ein Landwirtschaftliches Arbeitsgerät gemäß dem Oberbegriff des Patentanspruches 1.

Im Bereich der Landwirtschaft ist es bekannt, Arbeitsgeräte zum Anhängen an Zugmaschinen zu verwenden, die zur Bearbeitung von landwirtschaftlichen Nutzflächen, insbesondere zum Ausbringen von Verteilgut und/oder zur Bodenbearbeitung, eingesetzt werden. Derartige Arbeitsgeräte weisen häufig Bodenbearbeitungswerkzeuge wie beispielsweise Bodenwalzen auf, die essenziell für die Vorbereitung der Nutzfläche bzw. des Ackerbodens für die Aussaat sind. Aus dem Stand der Technik sind derartige Bodenbearbeitungswerkzeuge bzw. Bodenwalzen bekannt, die nach Art eines Reifenpackers gestaltet sind und mehrere Walzen- und/oder Radelemente aufweisen. Die Walzen- und/oder Radelemente sind dabei in der Regel quer zur Fahrtrichtung und nebeneinander angeordnet, um eine gleichmäßige und effiziente Bodenverdichtung zu erreichen.

Darüber hinaus ist bekannt, derartige als Reifenpacker ausgebildete Bodenwalzen als Fahrwerke gattungsgemäßer Arbeitsgeräte zu verwenden. Ein solches Fahrwerk, das entweder ein oder mehrere Achsen aufweisen kann, ist dazu vorgesehen, dass das Arbeitsgerät sowohl auf Nutzflächen bzw. Ackerböden als auch auf öffentlichen Straßen bewegt und/oder gezogen werden kann.

Das zulässige Gesamtgewicht derartiger Arbeitsgeräte ist dabei gemäß gesetzlicher Vorgaben je nach Anzahl der in Fahrtrichtung zueinander versetzten Achsen bzw. der zulässigen Achslasten beschränkt. Beispielsweise ist gemäß der europäischen Verordnung (EU) 2015/208 pro Achse (Einzelachse) eine zulässige Achslast von 10 t vorgesehen, während für Doppelachsen je nach Achsabstand Achslasten zwischen 11 t bis 20 t zulässig sind. Bei Dreifachachsen oder noch mehr Achsen sind sogar Achslasten von über 20 t zulässig.

Neben der eigentlichen Lastaufnahme sind derartige Fahrwerke in der Regel auch zum Abbremsen der Achsen und damit des Arbeitsgeräts vorgesehen.

Ein derartiges landwirtschaftliches Arbeitsgerät ist beispielsweise in der Druckschrift WO 2023/138737 A1 beschrieben. Das dabei offenbarte landwirtschaftliche Arbeitsgerät ist zum Anhängen an eine Zugmaschine, wie beispielsweise einen Traktor, vorgesehen und umfasst wenigstens eine gattungsgemäße Bodenwalze, insbesondere nach Art eines Reifenpackers, mit mehreren quer zur Fahrtrichtung und zumindest im Wesentlichen nebeneinander angeordneten Walzen- und/oder Radelementen. Die Bodenwalze ist in wenigstens ein Hauptfahrwerk und wenigstens ein Hilfsfahrwerk unterteilt. Das Hauptfahrwerk besteht aus wenigstens zwei, insbesondere zueinander in Fahrtrichtung versetzten, Hauptachsen, an denen jeweils wenigstens ein Walzen- und/oder Radelement angeordnet ist. Das Hilfsfahrwerk besteht aus wenigstens einer zu den Hauptachsen in Fahrtrichtung versetzten Hilfsachse, an welcher ebenfalls wenigstens ein Walzen- und/oder Radelement angeordnet ist. Des Weiteren ist dem Hauptfahrwerk wenigstens ein mit einem ersten Bremsdruck beaufschlagbarer erster Bremskreis zum Abbremsen der Hauptachsen zugeordnet, welcher gemäß gesetzlicher Vorgaben insbesondere mit variablem Bremsdruck beaufschlagbar ist.

Bei derartig ausgeführten Arbeitsgeräten hat sich die Abbremsung des Hilfsfahrwerks, insbesondere der Hilfsachse, jedoch als problematisch erwiesen. Häufig werden solche Hilfsfahrwerke bzw. Hilfsachsen zur Kosteneinsparung und der Einfachheit halber überhaupt nicht zur Abbremsung vorgesehen und entsprechend ungebremst ausgeführt. Sofern solche Hilfsfahrwerke bzw. Hilfsachsen doch zur Abbremsung vorgesehen und entsprechend ausgestattet sind, werden diese in der Regel innerhalb eines gemeinsamen Bremskreises, insbesondere mit demselben Bremsdruck, wie das Hauptfahrwerk bzw. die Hauptachsen beaufschlagt, was sich aufgrund unterschiedlicher Achslasten bzw. Lastaufnahmen nachteilig auf die Abbremsung des Hilfsfahrwerks bzw. der Hilfsachse auswirkt.

Der vorliegenden Erfindung liegt daher die Aufgabe zugrunde, ein landwirtschaftliches Arbeitsgerät anzugeben, bei welchem die Abbremsung und/oder das Bremsverhalten noch weiter verbessert ist.

Diese Aufgabe wird erfindungsgemäß dadurch gelöst, dass dem Hilfsfahrwerk wenigstens ein mit einem, vorzugsweise konstanten, zweiten Bremsdruck beaufschlagbarer zweiter Bremskreis zum Abbremsen der Hilfsachse zugeordnet ist.

In Folge dieser Maßnahme ist in besonders einfacher Weise ein weiter optimiertes und/oder bedarfsgerechtes Abbremsen des Hilfsfahrwerks bzw. der Hilfsachse und damit des Arbeitsgeräts ermöglicht.

Unter dem Begriff "Bremskreis" ist in diesem Zusammenhang vorzugsweise zumindest eine zum jeweiligen Fahrwerk bzw. zur jeweiligen Achse führende und mit dem jeweiligen Bremsdruck beaufschlagbare Bremsleitung zu verstehen, welche je nach Ausführung zumindest teilweise nach Art einer Stichleitung und/oder Kreisleitung ausgebildet sein kann. Bevorzugt sind entlang des jeweiligen Bremskreises und/oder vorgeschaltet zu den Bremskreisen Steuer- und/oder Regeleinrichtungen, beispielsweise nach Art von Druckventilen oder dergleichen, vorgesehen, mittels denen wenigstens einer der jeweiligen Bremsdrücke einstellbar und/der anpassbar ist. Ferner bevorzugt ist jeweils an wenigstens einem Walzen- und/oder Radelement des jeweiligen Fahrwerks eine Bremseinrichtung nach Art einer Scheiben-, Trommelbremse oder dergleichen und/oder ein Bremsgestänge vorgesehen, welche über den jeweiligen Bremskreis mit dem entsprechenden Bremsdruck beaufschlagbar ist. Vorzugsweise ist dabei vorgesehen, dass die Bremseinrichtung zumindest teilweise zwischen zwei Walzen- und/oder Radelementen und/oder innerhalb einer einem jeweiligen Walzen- und/oder Radelement zugeordneten Felge oder einem Rohrsegment angeordnet ist. Außerdem ist alternativ oder zusätzlich wenigstens eine Druckquelle zur Erzeugung und/oder Speicherung des jeweiligen Bremsdrucks vorgesehen, wobei die wenigstens eine Druckquelle an der Zugmaschine und/oder am Arbeitsgerät angeordnet sein kann.

Des Weiteren ist unter dem Begriff "Walzen- und/oder Radelement" vorzugsweise je nach Ausführung zumindest ein Walzenabschnitt bzw. Walzensegment und/oder wenigstens ein Rad zu verstehen. Entsprechend sind unter dem Begriff "Walzen- und/oder Radelemente" vorzugsweise je nach Ausführung mehrere einzelne und/oder separate Walzenabschnitte bzw. Walzensegmente und/oder mehrere Räder zu verstehen. Besonders bevorzugt umfasst ein derartiges Rad bzw. derartige Räder wenigstens einen Reifen und/oder wenigstens eine Radfelge.

In einer bevorzugten Ausführungsform des erfindungsgemäßen Arbeitsgeräts ist vorgesehen, dass sich der zweite Bremsdruck, insbesondere die an dem Hilfsfahrwerk und/oder der Hilfsachse resultierende Bremskraft, vom ersten Bremsdruck, insbesondere von der am Hauptfahrwerk und/oder den jeweiligen Hauptachsen resultierenden Bremskraft, unterscheidet. Je nach Ausführung kann dabei bevorzugt wenigstens eine dem jeweiligen Walzen- und/oder Radelement zugeordnete Bremseinrichtung unmittelbar fluidisch, insbesondere pneumatisch und/oder hydraulisch, und/oder mechanisch über ein zugeordnetes Bremsgestänge oder dergleichen betätigbar sein. Vorzugsweise ist die Bremseinrichtung dazu eingerichtet, in Abhängigkeit des jeweiligen Bremsdrucks eine entsprechende Bremskraft in das jeweilige Fahrwerk und/oder die jeweilige Achse einzuleiten. Insbesondere ist dabei für das Hauptfahrwerk und/oder die Hauptachsen wenigstens eine erste Bremseinrichtung und für das Hilfsfahrwerk und/oder die Hilfsachse wenigstens eine zweite Bremseinrichtung vorgesehen. Eine derartige Ausführungsform hat den Vorteil, dass die unterschiedlichen Bremsdrücke und/oder Bremskräfte optimal auf den jeweiligen Bedarf einstellbar sind.

In einer ferner bevorzugten Ausführungsform des erfindungsgemäßen Arbeitsgeräts ist zwischen dem ersten und zweiten Bremsdruck ein unterschiedliches Druckniveau eingestellt und/oder einstellbar. Dabei ist vorgesehen, dass sich der zweite Bremsdruck, welcher dem Hilfsfahrwerk bzw. der Hilfsachse zugeordnet ist, vom ersten Bremsdruck, welcher dem Hauptfahrwerk bzw. den Hauptachsen zugeordnet ist, vom Druckniveau unterscheidet. Mit anderen Worten ist für den ersten Bremsdruck wenigstens ein erstes Druckniveau und für den zweiten Bremsdruck wenigstens ein zweites Druckniveau einstellbar. Das zweite Druckniveau kann dabei höher sein als das erste Druckniveau. Das zweite Druckniveau kann alternativ oder zusätzlich niedriger sein als das erste Druckniveau. Ferner können auch jeweils mehrere unterschiedliche erste oder zweite Druckniveaus vorgesehen sein. Beispielsweise können ein oder mehrere einstellbare Druckniveaus für den ersten Bremsdruck vorgesehen sein. Alternativ oder zusätzlich können auch ein oder mehrere einstellbare Druckniveaus für den zweiten Bremsdruck vorgesehen sein. Darüber hinaus ist auch denkbar, dass die jeweils mehreren Druckniveaus des ersten und zweiten Bremsdrucks gleich sind, wobei diese bei unterschiedlichen Situationen oder Betriebsparametern eingestellt und/oder umgeschaltet werden. Beispielsweise kann in einer Betriebssituation oder bei Erreichen eines definierten Betriebsparameters das Druckniveau des zweiten Bremsdrucks in Richtung und/oder auf das gleiche Druckniveau wie des ersten Bremsdrucks eingestellt und/oder angepasst werden. Eine derartige Ausführungsform hat den Vorteil, dass die unterschiedlichen Bremsdrücke und/oder Bremskreise noch individueller einstellbar sind.

In einer Weiterbildung des erfindungsgemäßen Arbeitsgeräts ist der erste und/oder zweite Bremsdruck, insbesondere die erste und/oder zweite Bremskraft, variabel in Abhängigkeit wenigstens eines Betriebsparameters anpassbar. Insbesondere wird der erste und/oder zweite Bremsdruck angepasst, wenn ein definierter Betriebsparameter des Arbeitsgeräts und/oder der Umgebung eingestellt und/oder erreicht ist. Dies hat den Vorteil, dass der Bremsdruck des Hauptfahrwerks bzw. der Hauptachse und/oder des Hilfsfahrwerks bzw. der Hilfsachse situationsgerecht anpassbar ist. Der erste und/oder zweite Bremsdruck können dabei ferner bevorzugt mehrstufig und manuell von einem Bediener und/oder mehrstufig und automatisiert von einem dem Arbeitsgerät zugeordneten Steuer- und/oder Regelsystem, insbesondere in Abhängigkeit wenigstens eines Betriebsparameters, einstellbar und/oder anpassbar sein. Besonders bevorzugt ist vorgesehen, dass der erste Bremsdruck, insbesondere die erste Bremskraft, variabel in Abhängigkeit wenigstens eines Betriebsparameters einstellbar ist und der zweite Bremsdruck, insbesondere die zweite Bremskraft, konstant und/oder unverstellbar ist.

In einer bevorzugten Weiterbildung des erfindungsgemäßen Arbeitsgeräts ist der wenigstens eine Betriebsparameter gebildet durch eine Ausstattung des Arbeitsgeräts. Die Ausstattungen des Arbeitsgeräts oder der Arbeitsgeräte können sich vorzugsweise in Abhängigkeit einer auswählbaren Maschinenkonfiguration unterscheiden. Beispielsweise können sich die Arbeitsgeräte hinsichtlich der Größe, Anzahl oder Art der jeweiligen am Arbeitsgerät anbringbaren und/oder angeordneten Werkzeuge oder Zusatzaggregate unterscheiden. Alternativ oder zusätzlich ist der wenigstens eine Betriebsparameter gebildet durch eine Arbeitsgerätestellung. Vorzugsweise ist das Arbeitsgerät für den Betrieb oder Transport auf einer öffentlichen Straße zumindest teilweise in einer zusammengeklappten bzw. kompakten Transportstellung und einer für den Betrieb auf einer Nutzfläche zumindest teilweise ausgeklappten Transportstellung verbringbar. Hierbei kann besonders bevorzugt vorgesehen sein, dass die Bodenwalze zumindest teilweise selbst und/oder ein dem Arbeitsgerät zugeordneter Rahmen, insbesondere an dem wenigstens einige der Werkzeuge und/oder zumindest Teile der Bodenwalze angeordnet sind, zwischen den unterschiedlichen Arbeitsgerätestellungen verstellbar ist. Ferner ist der wenigstens eine Betriebsparameter alternativ oder zusätzlich gebildet durch einen Behälterfüllstand des Arbeitsgeräts. Hierbei kann das Arbeitsgerät bevorzugt einen oder mehrere Behälter zum Aufnehmen von Betriebsmaterialien und/oder auszubringenden Verteilmaterialien, wie beispielsweise Saatgut und/oder Dünger, umfassen. Somit ist der jeweilige Bremsdruck mittels einer Füllstandserfassung und in Abhängigkeit des Behälterfüllstands, welcher sich auf das Gesamtgewicht des Arbeitsgeräts auswirkt, anpassbar. Darüber hinaus ist der wenigstens eine Betriebsparameter alternativ oder zusätzlich gebildet durch eine Fahrgeschwindigkeit des Arbeitsgeräts und/oder einen Fahruntergrund auf dem das Arbeitsgerät bewegt wird. Beispielsweise kann vorgesehen sein, dass sich so der Bremsdruck in Abhängigkeit der Fahrgeschwindigkeit oder des Fahruntergrunds unterscheidet. Ferner kann für hohe Fahrgeschwindigkeiten ein höherer Bremsdruck erforderlich sein. Darüber hinaus kann alternativ oder zusätzlich für den Betrieb auf einer öffentlichen Straße ein höherer Bremsdruck vorgesehen sein als für einen Betrieb auf einer Nutzfläche bzw. einem Ackerboden. Die situationsgerechte Anpassbarkeit des Bremsdruck ist dadurch noch weiter gesteigert.

In einer anderen Weiterbildung des erfindungsgemäßen Arbeitsgeräts ist das Arbeitsgerät in einer für die Bearbeitung einer Nutzfläche vorgesehene

Arbeitsstellung und eine für den Transport auf einer Straße vorgesehene Transportstellung verstellbar und/oder verbringbar. Die Walzen- und/oder Radelemente der Hauptachsen und das wenigstens eine Walzen- und/oder Radelement der Hilfsachse sind in der Arbeits- und Transportstellung in einer den Fahruntergrund kontaktierenden Weise verbringbar. Hierbei ist insbesondere vorgesehen, dass Arbeitsgerät in der Transportstellung bzw. während des Betriebs auf einer öffentlichen Straße über das wenigstens eine Hilfsfahrwerk, insbesondere die wenigstens eine Hilfsachse und/oder das daran angeordnete Rad, bewegbar und/oder abrollbar ist. Neben einer Beeinflussung und/oder Erhöhung des zulässigen Gesamtgewichts des Arbeitsgeräts ist dadurch auch eine verbesserte Abbremsung und/oder Bremskraftverteilung am Arbeitsgerät in der Transportstellung erreicht.

In einer weiteren bevorzugten Ausführungsform des erfindungsgemäßen Arbeitsgeräts ist wenigstens einer Hauptachse, vorzugsweise jeder Hauptachse, wenigstens ein erstes Vorspann- und/oder Stellelement zugeordnet, mittels dem eine zwischen dem wenigstens einen Walzen- und/oder Radelement der Hauptachse, vorzugsweise den Hauptachsen, und dem Fahruntergrund resultierende erste Abstützkraft einstellbar ist. Das erste Vorspann- und/oder Stellelement kann hierbei je nach Ausführung zusätzlich betätigbar oder verstellbar sein. Ferner kann das erste Vorspann- und/oder Stellelement auch elektrisch, hydraulisch und/oder pneumatisch fernbetätigbar sein. Vorzugsweise kann das erste Vorspann- und/oder Stellelement nach Art eines Federelementes und/oder eines Stellzylinders ausgebildet sein. Ebenso kann das erste Vorspann-und/oder Stellelement alternativ oder zusätzlich nach Art eines Dämpfers ausgebildet sein. Das erste Vorspann- und/oder Stellelement kann ferner bevorzugt motorisch ausgebildet sein. Insbesondere ist das erste Vorspann-und/oder Stellelement dazu eingerichtet, dass wenigstens eine Hauptfahrwerk, insbesondere wenigstens eine Hauptachse und/oder das daran angeordnete Walzen- und/oder Radelement, gegen den Fahruntergrund bzw. den Boden anzudrücken und/oder vorzuspannen. Hierüber ist eine verbesserte Gewichtsverteilung des Arbeitsgeräts über die jeweiligen Achsen bzw. Walzen-und/oder Radelemente erreicht, welche sich positiv auf das Bremsverhalten des Arbeitsgeräts, insbesondere der Bodenwalze, auswirkt. Besonders bevorzugt kann das wenigstens eine erste Vorspann- und/oder Stellelement dazu eingerichtet sein, zumindest einen Teil eines dem Arbeitsgerät zugeordneten Rahmen, an dem das Hauptfahrwerk, insbesondere wenigstens eine Hauptachse, angeordnet ist, in einer die erste Abstützkraft beeinflussenden Weise zu betätigen.

In einer darüber hinaus bevorzugten Ausführungsform des erfindungsgemäßen Arbeitsgeräts ist der Hilfsachse wenigstens ein zweites Vorspann- und/oder Stellelement zugeordnet, mittels dem eine zwischen dem wenigstens einen Walzen- und/oder Radelement der Hilfsachse und dem Fahruntergrund resultierende zweite Abstützkraft einstellbar ist. Das zweite Vorspann- und/oder Stellelement kann hierbei je nach Ausführung zusätzlich betätigbar oder verstellbar sein. Ferner kann das zweite Vorspann- und/oder Stellelement auch elektrisch, hydraulisch und/oder pneumatisch fernbetätigbar sein. Vorzugsweise kann das zweite Vorspann- und/oder Stellelement nach Art eines Federelementes und/oder eines Stellzylinders ausgebildet sein. Ebenso kann das zweite Vorspann-und/oder Stellelement alternativ oder zusätzlich nach Art eines Dämpfers ausgebildet sein. Das zweite Vorspann- und/oder Stellelement kann ferner bevorzugt motorisch ausgebildet sein. Insbesondere ist das zweite Vorspann-und/oder Stellelement dazu eingerichtet, dass wenigstens eine Hilfsfahrwerk, insbesondere die Hilfsachse und/oder das daran angeordnete Walzen- und/oder Radelement, gegen den Fahruntergrund bzw. den Boden anzudrücken und/oder vorzuspannen. Hierüber ist eine noch weiter verbesserte Gewichtsverteilung des Arbeitsgeräts über die jeweiligen Achsen bzw. Walzen- und/oder Radelemente erreicht, welche sich positiv auf das Bremsverhalten des Arbeitsgeräts, insbesondere der Bodenwalze, auswirkt.

In einer weiteren Weiterbildung des erfindungsgemäßen Arbeitsgeräts ist das erste und/oder zweite Vorspann- und/oder Stellelement dazu eingerichtet, die erste und/oder zweite Abstützkraft beim Überfahren von Unebenheiten entlang des Fahruntergrunds zumindest annährend konstant zu halten. Vorzugsweise ist vorgesehen, dass das erste und/oder zweite Vorspann- und/oder Stellelement dazu eingerichtet ist, dass Hauptfahrwerk und/oder Hilfsfahrwerk, insbesondere die Hauptachsen und/oder die Hilfsachse, beim Überfahren von Unebenheiten und bei zumindest nahezu gleichbleibender erster und/oder zweiter Abstützkraft nachzustellen. Besonders bevorzugt ist weiterhin ein erfindungsgemäßes Arbeitsgerät, bei dem das Gewicht des Arbeitsgeräts mittels des ersten Vorspann-und/oder Stellelements derart zwischen dem Hauptfahrwerk und dem Hilfsfahrwerk verteilbar ist, dass die zweite Abstützkraft zumindest im Wesentlichen bzw. weitestgehend konstant ist, wobei dabei vorzugsweise die wenigstens eine Hilfsachse mittels des zweiten Vorspann- und/oder Stellelements zum Folgen von Unebenheiten nachgestellt wird und/oder nachstellbar ist. Alternativ oder zusätzlich kann dem Arbeitsgerät auch wenigstens ein Steuer-und/oder Regelsystem zugeordnet sein, welches dazu eingerichtet ist, dass erste und/oder zweite Vorspann- und/oder Stellelement entsprechend derart zu steuern-und/oder zu regeln, dass die erste und/oder zweite Abstützkraft zumindest nahezu konstant ist. Bei einer derartigen Ausführungsform ist ein zumindest quasi situationsunabhängiges Bremsverhalten erreicht.

Darüber hinaus ist ein erfindungsgemäßes Arbeitsgerät bevorzugt, bei welchem das erste und/oder zweite Vorspann- und/oder Stellelement dazu eingerichtet ist, die erste und/oder zweite Abstützkraft variabel in Abhängigkeit eines Betriebsparameters einzustellen. Bevorzugt ist das zugeordnete Steuer- und/oder Regelsystem dazu eingerichtet, die erste und/oder zweite Abstützkraft, insbesondere durch Betätigung des ersten und/oder zweiten Vorspann- und/oder Stellelements, in Abhängigkeit zumindest eines der vorstehend bereits beschriebenen Betriebsparameter anzupassen. Somit ist das zumindest quasi situationsunabhängige Bremsverhalten noch weiter verbessert. Hierbei ist ein erfindungsgemäßes Arbeitsgerät besonders bevorzugt, bei dem das erste Vorspann- und/oder Stellelement dazu eingerichtet ist, die erste Abstützkraft variabel in Abhängigkeit wenigstens eines der Betriebsparameter derart einzustellen, dass die zweite Abstützkraft zumindest im Wesentlichen bzw. weitestgehend konstant ist. Mit anderen Worten ist hierdurch ein bevorzugtes Arbeitsgerät geschaffen, bei dem die Hauptachsen jeweils eine variable Achslast, beispielsweise zwischen 3 t und 5 t oder zwischen 3 t und 6 t, und die wenigstens eine Hilfsachse eine zumindest im Wesentlichen konstante Achslast, beispielsweise von etwa 4 t, 5 t oder 6 t, aufnehmen.

In einer anderen bevorzugten Ausführungsform des erfindungsgemäßen Arbeitsgeräts ist der erste und/oder zweite Bremsdruck, insbesondere die erste und/oder zweite Bremskraft, variabel in Abhängigkeit der ersten und/oder zweiten Abstützkraft anpassbar. Somit kann alternativ oder zusätzlich zum anpassbaren ersten Bremsdruck auch der zweite Bremsdruck anpassbar sein. Das Bremsverhalten kann somit noch feiner bzw. individueller aufeinander abgestimmt werden.

Bei einer besonders bevorzugten Ausführungsform des erfindungsgemäßen Arbeitsgeräts ist die Hilfsachse in Fahrtrichtung vor den Hauptachsen angeordnet. Vorzugsweise ist dabei vorgesehen, dass die mehreren Hauptachsen in Fahrtrichtung versetzt zueinander angeordnet sind. Entgegen der Fahrtrichtung gesehen bildet die wenigstens eine Hilfsachse somit die erste Achse des Arbeitsgeräts, während die Hauptachsen je nach Ausführung die zweite oder die zweite und dritte Achse des Arbeitsgeräts bilden. Ferner ist auch eine noch höhere Anzahl an in Fahrtrichtung zueinander versetzten Achsen denkbar. Mit anderen Worten ist die Hilfsachse vorlaufend zu den Hauptachsen angeordnet, was sich positiv auf das Fahrverhalten und/oder das Bremsverhalten auswirkt.

Weitere Einzelheiten der Erfindung sind der Beispielsbeschreibung und den Zeichnungen zu entnehmen. Die Zeichnungen zeigen
- Fig. 1: eine perspektivische Ansicht auf ein landwirtschaftliches Arbeitsgerät in einer Arbeitsstellung;
- Fig. 2: eine Draufsicht auf einen vergrößerten Abschnitt des landwirtschaftlichen Arbeitsgeräts aus Figur 1; und
- Fig. 3: eine Seitenansicht auf das landwirtschaftliche Arbeitsgerät aus Figur 1 in einer Transportstellung.

In der nachfolgenden Beschreibung werden gleiche Bezugszeichen für gleiche Gegenstände verwendet.

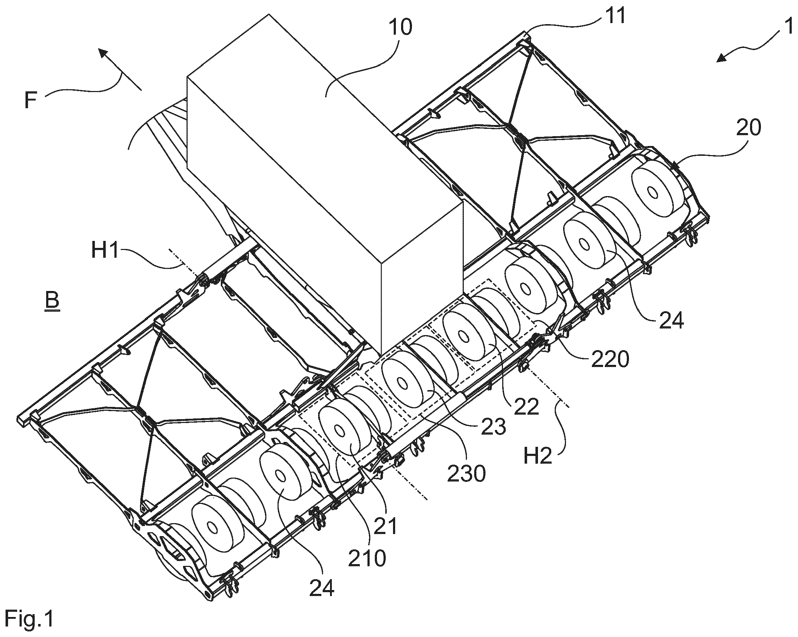

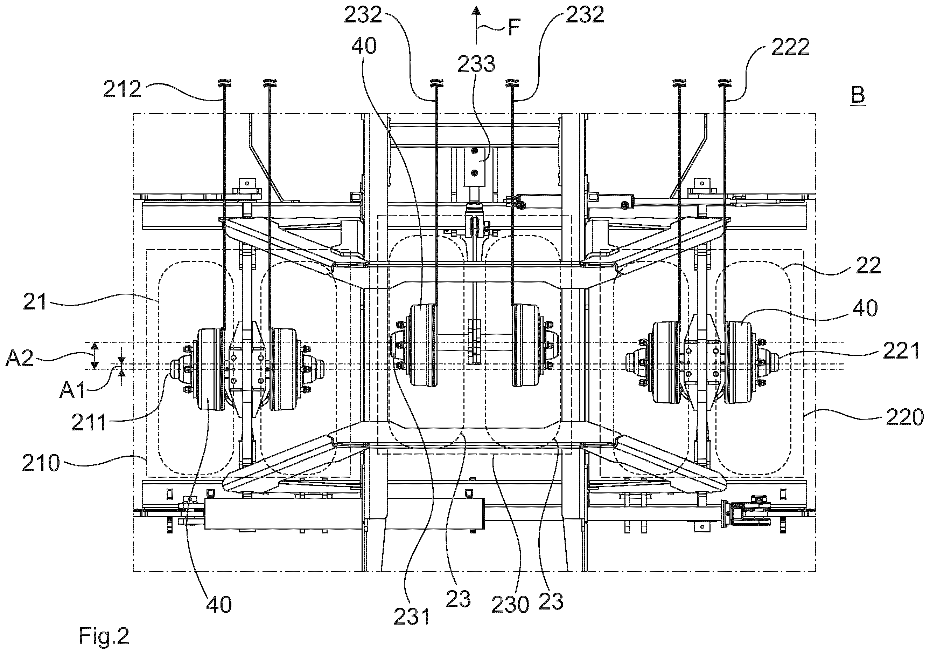

Figur 1 zeigt eine vereinfachte Perspektivansicht eines landwirtschaftlichen Arbeitsgeräts 1 in einer ausgeklappten Arbeitsstellung für den Betrieb auf einer landwirtschaftlichen Nutzfläche bzw. einem Ackerboden. In der Figur 2 ist eine Draufsicht auf einen vergrößerten Abschnitt des landwirtschaftlichen Arbeitsgeräts 1 aus Figur 1 gezeigt.

Genauer dargestellt zeigt Figur 1 ein landwirtschaftliches Arbeitsgerät 1 bzw. eine Anhängesämaschine zum Ausbringen von Verteilgut, wie beispielsweise Saatgut und/oder Dünger, und zum Anhängen an eine nicht dargestellte Zugmaschine, wie beispielsweise einem Traktor.

An dieser Stelle sei explizit erwähnt, dass das Arbeitsgerät 1 auch nach anderen Arten gezogener, landwirtschaftlicher Arbeitsgeräte 1, wie beispielsweise einem Bodenbearbeitungsgerät oder einer Feldspritze ausgebildet sein kann.

Der Einfachheit und Übersicht halber sind ausgenommen von einem Behälter 10 für das auszubringende Verteilgut und einer Bodenwalze 20, alle weiteren optionalen Arbeitswerkzeuge, wie beispielsweise Schare oder dergleichen, ausgeblendet.

Ein derartiges Arbeitsgerät 1 kann darüber hinaus beispielsweise ein oder mehrere Materialablagevorrichtungen zum Ablegen des im Behälter 10 vorgehaltenen Verteilguts umfassen. Sofern das landwirtschaftliche Arbeitsgerät 1 nach Art einer pneumatischen Sämaschine ausgeführt ist, kann zwischen dem Behälter 10 und den nicht dargestellten Materialablagevorrichtungen ein pneumatisches Fördersystem vorgesehen sein, welches zum bedarfsgerechten Fördern des Verteilguts aus dem Behälter 10 zu den Materialablagevorrichtungen vorgesehen ist.

Die dargestellte Bodenwalze 20 ist hierbei nach Art eines Reifenpackers mit mehreren quer zur Fahrtrichtung F und zumindest im Wesentlichen nebeneinander angeordneten Walzen- und/oder Radelementen 21-23 ausgebildet. Die Walzen- und/oder Radelemente 21-23 sind in diesem Ausführungsbeispiel nach Art einzelner Räder, welche insbesondere jeweils einen Reifen und eine Radfelge umfassen, ausgebildet. Alternativ dazu wäre auch denkbar, dass die Walzen- und/oder Radelemente 21-23 jeweils nach Art von einzelnen Walzenabschnitten oder Walzensegmenten ausgebildet sind. Ferner ist die Bodenwalze 20 hierbei dazu eingerichtet, den vorhergehend über nicht dargestellte Bodenbearbeitungswerkzeuge bearbeiteten Boden B der Nutzfläche zumindest teilweise rückzuverfestigen und so für die Aussaat vorzubereiten.

Darüber hinaus dient die Bodenwalze 20 hierbei als Fahrwerk 210-230, über welches das Arbeitsgerät 1 in gezogener Weise über den Boden B der Nutzfläche und/oder eine öffentliche Straße bewegt werden kann. Wie ebenfalls schematisch angedeutet, ist die Bodenwalze 20 in unterschiedliche Fahrwerke 210-230 unterteilt.

Mit Blick auf die Figur 2 wird ersichtlich, dass die Bodenwalze 20 ein Hauptfahrwerk 210, 220 und ein Hilfsfahrwerk 230 aufweist. Das Hauptfahrwerk 210, 220 umfasst zwei Hauptachsen 211, 221, an denen jeweils wenigstens eines der Walzen- und/oder Radelemente 21, 22 angeordnet ist. Wie ebenfalls ersichtlich, sind die Hauptachsen 211, 221 in diesem Ausführungsbeispiel in Fahrtrichtung F, insbesondere mit einem definierten Abstand A1, zueinander versetzt angeordnet. Alternativ dazu können die Hauptachsen 211, 221 auch ohne den Abstand A1 bzw. in Fahrtrichtung F nicht versetzt zueinander angeordnet sein.

Des Weiteren ist dem Hauptfahrwerk 210, 220 ein mit einem, insbesondere variablen, ersten Bremsdruck beaufschlagbarer erster Bremskreis 212, 222 zum Abbremsen der Hauptachsen 211, 221 zugeordnet. In der gezeigten Darstellung sind der Einfachheit halber nur einzelne Stichleitung des ersten Bremskreises 212, 222 zu sehen, welche zu den Hauptachsen 211, 221, insbesondere deren Walzen- und/oder Radelementen 21, 22, geführt sind.

Ferner ist zu erkennen, dass das Hilfsfahrwerk 230, hier beispielhaft mittig angeordnet, eine Hilfsachse 231 aufweist, an welcher zwei Walzen- und/oder Radelemente 23 angeordnet sind. Alternativ dazu wäre auch ein Hilfsfahrwerk 230, insbesondere eine Hilfsachse 231, mit nur einem Walzen- und/oder Radelement 23 denkbar. Des Weiteren ist zu sehen, dass die Hilfsachse 231 in Fahrtrichtung F versetzt zu den Hauptachsen 211, 221 angeordnet ist. Die Hilfsachse 231 befindet sich hierbei beispielhaft mit einem Abstand A2 vor den Hauptachsen 211, 221. Alternativ oder zusätzlich dazu kann die oder eine andere derartige Hilfsachse 231 auch in Fahrtrichtung F hinter wenigstens einer oder mehrerer Hauptachsen 211, 221 positioniert sein.

Darüber hinaus ist dem Hilfsfahrwerk 230 ein mit einem, insbesondere konstanten, zweiten Bremsdruck beaufschlagbarer zweiter Bremskreis 232 zum Abbremsen der Hilfsachse 231 zugeordnet. Der Einfachheit halber sind auch hier nur einzelne Stichleitungen des zweiten Bremskreises 232 zu sehen, welche zu der Hilfsachse 231, insbesondere dessen Walzen- und/oder Radelemente 23, geführt sind. Alternativ zu den zwei abgebildeten Stichleitungen kann auch nur eine Stichleitung oder mehr als zwei Stichleitungen im zweiten Bremskreis 232 vorgesehen sein.

Des Weiteren ist jeweils an einem Walzen- und/oder Radelement 21 - 23 des jeweiligen Fahrwerks 210, 220, 230 eine Bremseinrichtung 40 vorgesehen, welche über den jeweiligen Bremskreis 212, 222, 232 mit dem entsprechenden ersten oder zweiten Bremsdruck beaufschlagbar ist. Die Bremseinrichtung 40 ist in diesem Ausführungsbeispiel innerhalb einer einem jeweiligen Walzen- und/oder Radelement 21 - 23 zugeordneten Felge, insbesondere Radfelge, angeordnet. Alternativ oder zusätzlich könnte die Bremseinrichtung 40 auch zumindest teilweise innerhalb eines das jeweilige Walzen- und/oder Radelement 21 - 23 tragenden Rohrabschnitts oder dergleichen angeordnet sein. Alternativ oder zusätzlich kann der jeweiligen Bremseinrichtung 40 auch eine Bremsgestänge oder dergleichen zugeordnet sein.

Die für die Erzeugung und/oder Speicherung der jeweiligen Bremsdrücke erforderliche Druckquelle ist in diesem Ausführungsbeispiel der Übersicht halber nicht dargestellt, könnte jedoch an der Zugmaschine und/oder am Arbeitsgerät 1 angeordnet sein.

Im gezeigten Ausführbeispiel ist vorgesehen, dass sich der zweite Bremsdruck, insbesondere eine an dem Hilfsfahrwerk 230 und/oder der Hilfsachse 231 resultierende zweite Bremskraft, vom ersten Bremsdruck, insbesondere von einer am Hauptfahrwerk 210, 220 und/oder den jeweiligen Hauptachsen 211, 221 resultierenden ersten Bremskraft, unterscheidet.

Ferner ist in diesem Ausführungsbeispiel vorgesehen, dass zwischen dem ersten und zweiten Bremsdruck ein unterschiedliches Druckniveau eingestellt und/oder einstellbar ist. Der erste Bremsdruck ist darüber hinaus variabel in Abhängigkeit wenigstens eines Betriebsparameters anpassbar. Derartige Betriebsparameter können z.B. eine Ausstattung des Arbeitsgeräts 1 und/oder eine Arbeitsgerätestellung, beispielsweise eine Transport- und/oder Arbeitsstellung der Bodenwalze 20 und/oder des Arbeitsgeräts 1, sein. Weiterhin kann ein derartiger Betriebsparameter auch ein Behälterfüllstand des Arbeitsgeräts 1, insbesondere des Behälters 10, und/oder eine Fahrgeschwindigkeit sein, mit welcher das Arbeitsgerät 1 von der Zugmaschine gezogen wird. Ebenso kann ein derartiger Betriebsparameter aber auch ein Fahruntergrund B sein, auf dem das Arbeitsgerät 1 bewegt wird.

Alternativ oder zusätzlich dazu wäre auch denkbar, dass auch der zweite Bremsdruck variabel in Abhängigkeit wenigstens eines Betriebsparameters anpassbar ist.

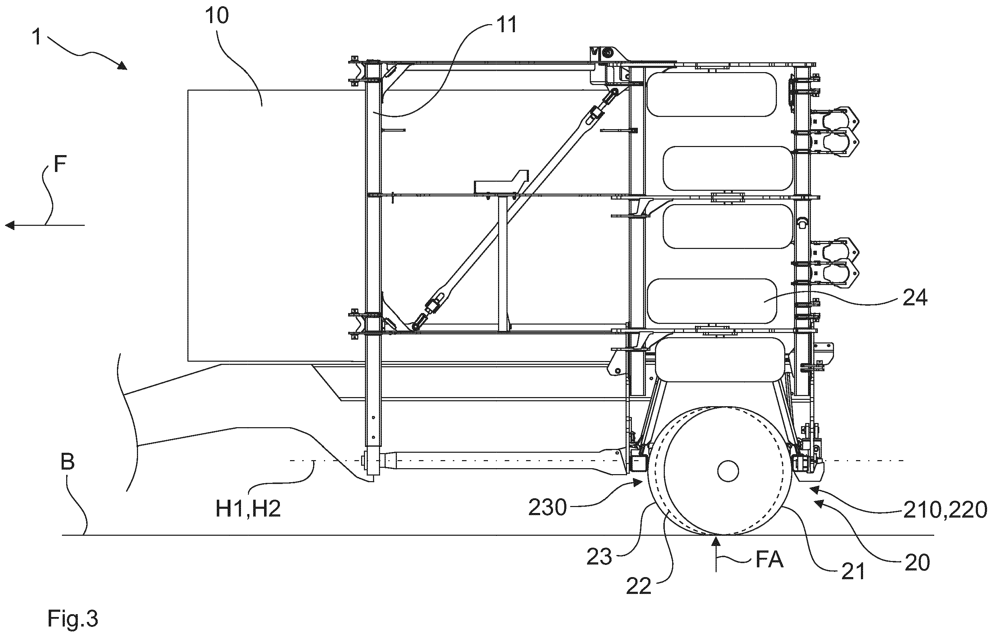

Mit Blick auf die Figuren 1 und 3 ist außerdem zu erkennen, dass das Arbeitsgerät 1 in einer für die Bearbeitung einer Nutzfläche vorgesehene Arbeitsstellung und eine für den Transport auf einer Straße vorgesehene Transportstellung verstellbar und/oder verbringbar ist. Hierzu ist in diesem Ausführungsbeispiel vorgesehen, dass Teile eines dem Arbeitsgerät 1 zugeordneten Rahmens 11, an dem einzelne Abschnitte der Bodenwalze 20 und/oder (nicht dargestellte) Bodenbearbeitungswerkzeuge angeordnet sind, um jeweils eine horizontale Schwenkachse H1, H2 verstellbar bzw. klappbar sind. In der Figur 3 befindet sich der jeweils linke und rechte Teil des Rahmens 11 in einer hochgeklappten Transportstellung zum Bewegen des Arbeitsgeräts 1 auf einer öffentlichen Straße und/oder auf Nebenbereichen auf der Nutzfläche, wie beispielsweise einem Vorgewende. Alternativ oder zusätzlich wäre auch denkbar, dass der Rahmen 11 unverstellbar ausgebildet ist und/oder zumindest nur einzelne Abschnitte der Bodenwalze 20 oder andere Bodenbearbeitungswerkzeuge zwischen einer Arbeits- und Transportstellung verstellbar, insbesondere anhebbar, ausgebildet sind.

In der Zusammenschau der Figuren 1 und 3 ist außerdem zu sehen, dass die Walzen- und/oder Radelemente 21, 22 der Hauptachsen 211, 221 und die Walzen- und/oder Radelemente 23 der Hilfsachse 231 sowohl in der Arbeitsstellung als auch in der Transportstellung in einer den Fahruntergrund B kontaktierenden Weise verbringbar sind. Somit rollt das Arbeitsgerät 1 auch auf der Straße über das eine oder die mehreren Walzen- und/oder Radelemente 23 des Hilfsfahrwerks 230 ab, um neben einer verbesserten Abstützlastverteilung auch eine verbessertes Bremsverhalten zu erreichen.

Bei genauerer Betrachtung der Figur 2 ist außerdem eine der Hilfsachse 231 zugeordnetes zweites Vorspann- und/oder Stellelement 233 zu sehen, mittels dem eine zwischen dem einen oder den mehreren Walzen- und/oder Radelementen 23 der Hilfsachse 231 und dem Fahruntergrund B resultierende zweite Abstützkraft FA einstellbar ist. Das zweite Vorspann- und/oder Stellelement 233 ist, insbesondere durch ein Nachstellen, dazu eingerichtet, die zweite Abstützkraft FA beim Überfahren von Unebenheiten entlang des Fahruntergrunds B zumindest annährend konstant zu halten. Alternativ oder zusätzlich ist das zweite Vorspann-und/oder Stellelement 233 dazu eingerichtet, die zweite Abstützkraft FA variabel in Abhängigkeit eines Betriebsparameters einzustellen. Ebenso wäre auch denkbar, dass die eingestellte zweite Abstützkraft FA von einem dem Arbeitsgerät 1 zugeordneten Steuer- und/oder Regelsystem derart berücksichtigt wird, dass der zweite Bremsdruck alternativ oder zusätzlich variabel in Abhängigkeit der zweiten Abstützkraft FA anpassbar ist.

In einer zum gezeigten alternativen oder zusätzlichen Ausführungsbeispiel wäre auch denkbar, dass wenigstens einer, vorzugsweise jeder, Hauptachse 211, 221 wenigstens ein erstes Vorspann- und/oder Stellelement zugeordnet ist, welches dazu eingerichtet ist, eine zwischen dem einen oder den mehreren Walzen-und/oder Radelementen 23 der wenigstens einen Hauptachse 211, 221 und dem Fahruntergrund B resultierende erste Abstützkraft einzustellen. Insbesondere kann dabei vorgesehen sein, dass die zweite Abstützkraft FA mittels einer entsprechenden Einstellung und/oder Verstellung des (nicht gezeigten) ersten Vorspann- und/oder Stellelements zumindest im Wesentlichen konstant gehalten wird. Das optionale (nicht gezeigten) erste Vorspann- und/oder Stellelement kann alternativ oder zusätzlich einem verstellbaren Teil des Rahmens 11 zugeordnet sein, an dem das Hauptfahrwerk 210, insbesondere wenigstens eine Hauptachse 211, 221, angeordnet ist.

Das in diesem Ausführungsbeispiel gezeigte Vorspann- und/oder Stellelement 233 ist nach Art eines hydraulischen oder pneumatischen Stellzylinders ausgebildet. Das Vorspann- und/oder Stellelement 233 kann jedoch alternativ oder zusätzlich auch nach Art eines Federelementes oder eines Dämpfers ausgebildet sein.

Je nach Ausführung ist insbesondere vorstellbar, dass der erste und/oder zweite Bremsdruck mehrstufig und manuell von einem Bediener und/oder mehrstufig und automatisiert von einem dem Arbeitsgerät 1 zugeordneten Steuer- und/oder Regelsystem, insbesondere in Abhängigkeit wenigstens eines Betriebsparameters, einstellbar und/oder anpassbar ist.

### Bezugszeichenliste

- 1: Arbeitsgerät
- 10: Behälter
- 11: Rahmen
- 20: Bodenwalze
- 21-24: Walzen- und/oder Radelemente
- 210: Hauptfahrwerk
- 211: Hauptachse
- 212: Erster Bremskreis
- 220: Hauptfahrwerk
- 221: Hauptachse
- 222: Erster Bremskreis
- 230: Hilfsfahrwerk
- 231: Hilfsachse
- 232: Zweiter Bremskreis
- 233: Vorspann- und/oder Stellelement
- 40: Bremseinrichtung

- A1, A2: Abstand
- B: Boden, Fahruntergrund
- F: Fahrtrichtung
- FA: Abstützkraft
- H1, H2: Horizontale Schwenkachse

## Patentansprüche

1. Landwirtschaftliches Arbeitsgerät (1) zum Anhängen an eine Zugmaschine, umfassend wenigstens eine Bodenwalze (20), vorzugsweise nach Art eines Reifenpackers, mit mehreren quer zur Fahrtrichtung (F) und zumindest im Wesentlichen nebeneinander angeordneten Walzen- und/oder Radelementen (21-24), wobei die Bodenwalze (20) unterteilt ist in:
- wenigstens ein Hauptfahrwerk (210, 220), bestehend aus wenigstens zwei, vorzugsweise zueinander in Fahrtrichtung (F) versetzten, Hauptachsen (211, 221), an denen jeweils wenigstens eines der Walzen- und/oder Radelemente (21-24) angeordnet ist; und
- wenigstens ein Hilfsfahrwerk (230), bestehend aus wenigstens einer zu den Hauptachsen (211, 221) in Fahrtrichtung (F) versetzten Hilfsachse (231), an welcher wenigstens eines der Walzen- und/oder Radelemente (21-24) angeordnet ist;
wobei dem Hauptfahrwerk (210, 220) wenigstens ein mit einem, vorzugsweise variablen, ersten Bremsdruck beaufschlagbarer erster Bremskreis (212, 222) zum Abbremsen der Hauptachsen (211, 221) zugeordnet ist, **dadurch gekennzeichnet, dass** dem Hilfsfahrwerk (230) wenigstens ein mit einem, vorzugsweise konstanten, zweiten Bremsdruck beaufschlagbarer zweiter Bremskreis (232) zum Abbremsen der Hilfsachse (231) zugeordnet ist.

2. Arbeitsgerät (1) nach Anspruch 1, **dadurch gekennzeichnet, dass** sich der zweite Bremsdruck, insbesondere eine an dem Hilfsfahrwerk (230) und/oder der Hilfsachse (231) resultierende zweite Bremskraft, vom ersten Bremsdruck, insbesondere von einer am Hauptfahrwerk (210, 220) und/oder den jeweiligen Hauptachsen (211, 221) resultierenden ersten Bremskraft, unterscheidet.

3. Arbeitsgerät (1) nach wenigstens einem der vorangehenden Ansprüche, **dadurch gekennzeichnet, dass** zwischen dem ersten und zweiten Bremsdruck ein unterschiedliches Druckniveau eingestellt und/oder einstellbar ist.

4. Arbeitsgerät (1) nach wenigstens einem der vorangehenden Ansprüche, **dadurch gekennzeichnet, dass** der erste und/oder zweite Bremsdruck, insbesondere die erste und/oder zweite Bremskraft, variabel in Abhängigkeit wenigstens eines Betriebsparameters anpassbar ist.

5. Arbeitsgerät (1) nach Anspruch 4, **dadurch gekennzeichnet, dass** der wenigstens eine Betriebsparameter gebildet ist durch:
- eine Ausstattung des Arbeitsgeräts (1); und/oder
- eine Arbeitsgerätestellung; und/oder
- einen Behälterfüllstand des Arbeitsgeräts (1); und/oder
- eine Fahrgeschwindigkeit; und/oder
- einen Fahruntergrund (B).

6. Arbeitsgerät (1) nach wenigstens einem der vorangehenden Ansprüche, **dadurch gekennzeichnet, dass** das Arbeitsgerät (1) in einer für die Bearbeitung einer Nutzfläche vorgesehene Arbeitsstellung und eine für den Transport auf einer Straße vorgesehene Transportstellung verstellbar und/oder verbringbar ist, wobei die Walzen- und/oder Radelemente (21-24) der Hauptachsen (211, 221) und das wenigstens eine Walzen- und/oder Radelement (21-24) der Hilfsachse (231) in der Arbeits- und Transportstellung in einer den Fahruntergrund (B) kontaktierenden Weise verbringbar sind.

7. Arbeitsgerät (1) nach wenigstens einem der vorangehenden Ansprüche, **dadurch gekennzeichnet, dass** wenigstens einer Hauptachse (211, 221), vorzugsweise jeder Hauptachse (211, 221), wenigstens ein erstes Vorspann-und/oder Stellelement (233) zugeordnet ist, mittels dem eine zwischen dem wenigstens einen Walzen- und/oder Radelement (21-24) der Hauptachse (211, 221), vorzugsweise den Hauptachsen (211, 221), und dem Fahruntergrund (B) resultierende erste Abstützkraft (FA) einstellbar ist.

8. Arbeitsgerät (1) nach wenigstens einem der vorangehenden Ansprüche, **dadurch gekennzeichnet, dass** der Hilfsachse (231) wenigstens ein zweites Vorspann- und/oder Stellelement (233) zugeordnet ist, mittels dem eine zwischen dem wenigstens einen Walzen- und/oder Radelement (21-24) der Hilfsachse (231) und dem Fahruntergrund (B) resultierende zweite Abstützkraft (FA) einstellbar ist.

9. Arbeitsgerät (1) nach wenigstens einem der vorangehenden Ansprüche 7 oder 8, **dadurch gekennzeichnet, dass** das erste und/oder zweite Vorspann-und/oder Stellelement (233) dazu eingerichtet ist, die erste und/oder zweite Abstützkraft (FA) beim Überfahren von Unebenheiten entlang des Fahruntergrunds (B) zumindest annährend konstant zu halten.

10. Arbeitsgerät (1) nach wenigstens einem der vorangehenden Ansprüche 7 oder 8, **dadurch gekennzeichnet, dass** das erste und/oder zweite Vorspann-und/oder Stellelement (233) dazu eingerichtet ist, die erste und/oder zweite Abstützkraft (FA) variabel in Abhängigkeit eines Betriebsparameters einzustellen.

11. Arbeitsgerät (1) nach Anspruch 10, **dadurch gekennzeichnet, dass** der erste und/oder zweite Bremsdruck, insbesondere die erste und/oder zweite Bremskraft, variabel in Abhängigkeit der ersten und/oder zweiten Abstützkraft (FA) anpassbar ist.

12. Arbeitsgerät (1) nach wenigstens einem der vorangehenden Ansprüche, **dadurch gekennzeichnet, dass** die Hilfsachse (231) in Fahrtrichtung (F) vor den Hauptachsen (211, 221) angeordnet ist.

## Claims

1. Agricultural implement (1) for attachment to a tractor, comprising at least one soil roller (20), preferably of the tyre packer type, having a plurality of roller and/or wheel elements (21-24) arranged transversely to the direction of travel (F) and at least substantially next to each other, the soil roller (20) being subdivided into:
- at least one main running gear (210, 220) consisting of at least two main axles (211, 221), preferably offset from each other in the direction of travel (F), on each of which at least one of the roller and/or wheel elements (21-24) is arranged; and
- at least one auxiliary running gear (230) consisting of at least one auxiliary axle (231), offset from the main axles (211, 221) in the direction of travel (F), on which at least one of the roller and/or wheel elements (21-24) is arranged;
the main running gear (210, 220) being assigned at least one first brake circuit (212, 222), to which a preferably variable first brake pressure can be applied, for braking the main axles (211, 221), **characterized in that** the auxiliary running gear (230) is assigned at least one preferably constant second brake circuit (232), to which a second brake pressure can be applied, for braking the auxiliary axle (231).

2. Implement (1) according to claim 1, **characterized in that** the second brake pressure, in particular a second brake force resulting at the auxiliary running gear (230) and/or the auxiliary axle (231), differs from the first brake pressure, in particular from a first brake force resulting at the main running gear (210, 220) and/or the respective main axles (211, 221).

3. Implement (1) according to at least one of the preceding claims, **characterized in that** a different pressure level is adjusted and/or can be adjusted between the first and second brake pressure.

4. Implement (1) according to at least one of the preceding claims, **characterized in that** the first and/or second brake pressure, in particular the first and/or second brake force, can be variably adapted depending on at least one operating parameter.

5. Implement (1) according to claim 4, **characterized in that** the at least one operating parameter is formed by:
- a configuration of the implement (1); and/or
- an implement position; and/or
- a container fill level of the implement (1); and/or
- a driving speed; and/or
- a driving surface (B).

6. Implement (1) according to at least one of the preceding claims, **characterized in that** the implement (1) is adjustable and/or movable in a working position intended for cultivating an agricultural area and in a transport position intended for transport on a road, the roller and/or wheel elements (21-24) of the main axles (211, 221) and the at least one roller and/or wheel element (21-24) of the auxiliary axle (231) being movable in the working and transport position in a manner contacting the driving surface (B).

7. Implement (1) according to at least one of the preceding claims, **characterized in that** at least one main axle (211, 221), preferably each main axle (211, 221), is assigned at least a first preloading and/or adjusting element (233), by means of which a first support force (FA) resulting between the at least one roller and/or wheel element (21-24) of the main axle (211, 221), preferably the main axles (211, 221), and the driving surface (B) can be adjusted.

8. Implement (1) according to at least one of the preceding claims, **characterized in that** the auxiliary axle (231) is assigned at least a second preloading and/or adjusting element (233) by means of which a second support force (FA) resulting between the at least one roller and/or wheel element (21-24) of the auxiliary axle (231) and the driving surface (B) can be adjusted.

9. Implement (1) according to at least one of the preceding claims 7 or 8, **characterized in that** the first and/or second preloading and/or adjusting element (233) is designed to keep the first and/or second support force (FA) at least approximately constant when driving over unevenness along the driving surface (B).

10. Implement (1) according to at least one of the preceding claims 7 or 8, **characterized in that** the first and/or second preloading and/or adjusting element (233) is designed to variably adjust the first and/or second support force (FA) depending on an operating parameter.

11. Implement (1) according to claim 10, **characterized in that** the first and/or second brake pressure, in particular the first and/or second brake force, is variably adjustable depending on the first and/or second support force (FA).

12. Implement (1) according to at least one of the preceding claims, **characterized in that** the auxiliary axle (231) is arranged in front of the main axles (211, 221) in the direction of travel (F).

## Revendications

1. Outil de travail (1) agricole destiné à être attelé à un tracteur, comprenant au moins un rouleau de sol (20), de préférence du type rouleau tasseur à pneus, comportant plusieurs éléments de rouleau et/ou de roue (21-24) agencés transversalement au sens de déplacement (F) et au moins sensiblement les uns à côté des autres, dans lequel le rouleau de sol (20) est subdivisé en :
- au moins un train de roulement principal (210, 220), composé d'au moins deux essieux principaux (211, 221), de préférence décalés l'un par rapport à l'autre dans le sens de déplacement (F), sur lesquels est agencé respectivement au moins un des éléments de rouleau et/ou de roue (21-24) ; et
- au moins un train de roulement auxiliaire (230), composé d'au moins un essieu auxiliaire (231) décalé par rapport aux essieux principaux (211, 221) dans le sens de déplacement (F), sur lequel est agencé au moins l'un des éléments de rouleau et/ou de roue (21-24) ;
dans lequel au train de roulement principal (210, 220) est associé au moins un premier circuit de freinage (212, 222) pouvant être alimenté par une première pression de freinage, de préférence variable, pour freiner les essieux principaux (211, 221), **caractérisé en ce qu'**au train de roulement auxiliaire (230) est associé au moins un second circuit de freinage (232), pouvant être alimenté par une seconde pression de freinage, de préférence constante, pour freiner l'essieu auxiliaire (231).

2. Outil de travail (1) selon la revendication 1, **caractérisé en ce que** la seconde pression de freinage, en particulier une seconde force de freinage résultante sur le train de roulement auxiliaire (230) et/ou l'essieu auxiliaire (231), se distingue de la première pression de freinage, en particulier d'une première force de freinage résultante sur le train de roulement principal (210, 220) et/ou les essieux principaux (211, 221) respectifs.

3. Outil de travail (1) selon au moins l'une des revendications précédentes, **caractérisé en ce qu'**un niveau de pression différent est réglé et/ou peut être réglé entre la première et la seconde pression de freinage.

4. Outil de travail (1) selon au moins l'une des revendications précédentes, **caractérisé en ce que** la première et/ou la seconde pression de freinage, en particulier la première et/ou la seconde force de freinage, peut être adaptée de manière variable en fonction d'au moins un paramètre de fonctionnement.

5. Outil de travail (1) selon la revendication 4, **caractérisé en ce que** l'au moins un paramètre de fonctionnement est constitué par :
- un équipement de l'outil de travail (1) ; et/ou
- une position d'outil de travail ; et/ou
- un niveau de remplissage de réservoir de l'outil de travail (1) ; et/ou
- une vitesse de déplacement ; et/ou
- un revêtement de roulement (B).

6. Outil de travail (1) selon au moins l'une des revendications précédentes, **caractérisé en ce que** l'outil de travail (1) peut être déplacé et/ou amené dans une position de travail prévue pour le traitement d'une surface utile et dans une position de transport prévue pour le transport sur une route, dans lequel les éléments de rouleau et/ou de roue (21-24) des essieux principaux (211, 221) et l'au moins un élément de rouleau et/ou de roue (21-24) de l'essieu auxiliaire (231) peuvent être amenés, dans les positions de travail et de transport, de manière à être en contact avec le revêtement de roulement (B).

7. Outil de travail (1) selon au moins l'une des revendications précédentes, **caractérisé en ce que,** à au moins un essieu principal (211, 221), de préférence à chaque essieu principal (211, 221), est associé au moins un premier élément de précontrainte et/ou de réglage (233), par le biais duquel une première force d'appui (FA), résultant entre l'au moins un élément de rouleau et/ou de roue (21-24) de l'essieu principal (211, 221), de préférence des axes principaux (211, 221), et le revêtement de roulement (B), est réglable.

8. Outil de travail (1) selon au moins l'une des revendications précédentes, **caractérisé en ce que,** à l'essieu auxiliaire (231), est associé au moins un second élément de précontrainte et/ou de réglage (233) par le biais duquel une seconde force d'appui (FA), résultant entre l'au moins un élément de rouleau et/ou de roue (21-24) de l'essieu auxiliaire (231) et le revêtement de roulement (B), est réglable.

9. Outil de travail (1) selon au moins l'une des revendications 7 ou 8 précédentes, **caractérisé en ce que** le premier et/ou le second élément de précontrainte et/ou de réglage (233) est conçu pour maintenir la première et/ou la seconde force d'appui (FA) au moins approximativement constante lors du franchissement d'irrégularités le long du revêtement de roulement (B).

10. Outil de travail (1) selon au moins l'une des revendications 7 ou 8 précédentes, **caractérisé en ce que** le premier et/ou le second élément de précontrainte et/ou de réglage (233) est conçu pour régler la première et/ou la seconde force d'appui (FA) de manière variable en fonction d'un paramètre de fonctionnement.

11. Outil de travail (1) selon la revendication 10, **caractérisé en ce que** la première et/ou la seconde pression de freinage, en particulier la première et/ou la seconde force de freinage, peut être adaptée de manière variable en fonction de la première et/ou de la seconde force d'appui (FA).

12. Outil de travail (1) selon au moins l'une des revendications précédentes, **caractérisé en ce que** l'essieu auxiliaire (231) est agencé en avant des essieux principaux (211, 221) dans le sens de déplacement (F).
